(19) Europäisches Patentamt / European Patent Office / Office européen des brevets

(11) **EP 4 501 665 B1**

(12) **EUROPEAN PATENT SPECIFICATION**

(45) Date of publication and mention
of the grant of the patent:
**18.03.2026 Bulletin 2026/12**

(21) Application number: **24190678.3**

(22) Date of filing: **24.07.2024**

(51) International Patent Classification (IPC):
**B60C 11/03** *(2006.01)*   **B60C 11/04** *(2006.01)*
**B60C 11/12** *(2006.01)*   **B60C 11/00** *(2006.01)*

(52) Cooperative Patent Classification (CPC):
**B60C 11/04; B60C 11/0323; B60C 11/033;**
**B60C 11/1281;** B60C 11/005; B60C 11/0306;
B60C 11/1236; B60C 2011/0025; B60C 2011/0033;
B60C 2011/0344; B60C 2011/0346;
B60C 2011/0348; B60C 2011/0353;
B60C 2011/0355; B60C 2011/039;   (Cont.)

(54) **HEAVY-DUTY TIRE**

SCHWERLASTREIFEN

PNEU POUR POIDS LOURDS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **03.08.2023 JP 2023127268**

(43) Date of publication of application:
**05.02.2025 Bulletin 2025/06**

(73) Proprietor: **Sumitomo Rubber Industries, Ltd.
Kobe-shi Hyogo-ken 651-0072 (JP)**

(72) Inventors:
• **YOSHINO, Masayuki**
  **Kobe-shi 651-0072 (JP)**
• **IZUMO, Suguru**
  **Kobe-shi 651-0072 (JP)**

(74) Representative: **Manitz Finsterwald
Patent- und Rechtsanwaltspartnerschaft mbB
Martin-Greif-Straße 1
80336 München (DE)**

(56) References cited:
**EP-A1- 4 015 239    EP-A1- 4 119 358
EP-A1- 4 331 868**

(52) Cooperative Patent Classification (CPC): (Cont.)
 B60C 2200/06; Y02T 10/86

**Description**

TECHNICAL FIELD

The present invention relates to a heavy-duty tire.

BACKGROUND OF THE INVENTION

Due to recent environmental problems, electric cars (EV cars) have become more popular even in large vehicles such as a truck, a bus, and the like. Weights of EV cars increase as compared with conventional engine cars, and torque also increases since EV cars are driven by motors, and therefore high-level abrasion resistance is required for tires for large EV cars.

SUMMARY OF THE INVENTION

As a method of improving abrasion resistance of a tire for a truck/bus, a technique of micronizing carbon black or making carbon black to be a high structure is known (for example, JP H06-279624 A).
The above-described method of micronizing carbon black or making carbon black to be a high structure is not sufficient for improving fuel efficiency of a tire. Moreover, dispersibility of carbon black also deteriorates due to deterioration of processability accompanied by the micronization, and rather, abrasion resistance of a tire may deteriorate. Therefore, there is a limit for a conventional method of improving performance by refinement on carbon black. EP 4015239 discloses a tire comprising a tread, wherein a cap rubber layer of an outer surface of the tread is formed of a rubber composition comprising a rubber component having a total content of 90% by mass or more of an isoprene-based rubber and a butadiene rubber and silica having a nitrogen adsorption specific surface area (N2 SA) of 180 m2 /g or more, wherein a total cis content in the butadiene rubber is less than 90% by mass, wherein a tan $\delta$ at 70°C of the rubber composition of the cap rubber layer is less than 0.15, wherein the tread has circumferential grooves extending continuously in a tire circumferential direction and lateral grooves extending in a tire width direction, and wherein a ratio of a total area S2 of the lateral grooves to a total area S1 of the circumferential grooves (S2/S1) is less than 0.80.
EP4119358 A1 discloses another tire comprising a tread part of a rubber composition comprising a rubber component comprising an isoprene-based rubber and a styrene-butadiene rubber.
It is an object of the present invention to provide a heavy-duty tire that can improve in abrasion resistance.
The present invention relates to a heavy-duty tire comprising a tread part,

wherein the tread part comprises

two circumferential main grooves extending continuously in a tire circumferential direction,
a pair of shoulder land parts partitioned off by the circumferential main grooves and ground-contacting ends, and
a crown land part located between the pair of shoulder land parts,

wherein the crown land part comprises one or more circumferential narrow grooves extending continuously in the tire circumferential direction, and
wherein, in a case where H1, in mm, represents a groove depth of a deepest part of the circumferential main grooves, E, in mm, represents a maximum thickness of the shoulder land parts measured in a direction normal to a tire inner cavity surface, and 70°C tan $\delta$ represents a tan $\delta$ at 70°C of a rubber composition constituting the tread part, H1 is 15.0 or less, and E $\times$ 70°C tan $\delta$ is 7.5 or less.
A land ratio R in a grounding surface of the tread part after the tread part is abraded along a tread radius so that the groove depth of the deepest part of the circumferential main grooves becomes 75% of a groove depth in mint condition is 0.90 or more.

According to the present invention, a heavy-duty tire that can improve in abrasion resistance is provided.

BRIEF DESCRIPTION OF THE DRAWINGS

FIG. 1 is a meridian cross-sectional view of a heavy-duty tire relating to one embodiment of the present invention.
FIG. 2 is a development view of a tread part of the tire in FIG. 1.
FIG. 3 is a cross-sectional view along a C-C line in FIG. 2.

FIG. 4 is a cross-sectional view showing a circumferential narrow groove.

FIG. 5 is a cross-sectional view showing a variation of the circumferential narrow groove.

## DETAILED DESCRIPTION

A tire that is one embodiment of the present invention is a heavy-duty tire comprising a tread part,

wherein the tread part comprises

two circumferential main grooves extending continuously in a tire circumferential direction,
a pair of shoulder land parts partitioned off by the circumferential main grooves and ground-contacting ends, and
a crown land part located between the pair of shoulder land parts,

wherein the crown land part comprises one or more circumferential narrow grooves extending continuously in the tire circumferential direction, and
wherein, in a case where H1, in mm, represents a groove depth of a deepest part of the circumferential main grooves, E, in mm, represents a maximum thickness of the shoulder land parts measured in a direction normal to a tire inner cavity surface, and $70°C \tan \delta$ represents a $\tan \delta$ at $70°C$ of a rubber composition constituting the tread part, H1 is 15.0 or less, and $E \times 70°C \tan \delta$ is 7.5 or less.

A reason why abrasion resistance of the tire of the present invention is improved is considered as follows, although the following consideration is not intended to be bound by any theory.

When two circumferential main groves are provided and a groove depth of deepest parts of the circumferential main grooves is 15.0 mm or less, it is considered that pattern rigidity can be secured and heat generation can be suppressed. Moreover, when a crown land part is provided with a circumferential narrow groove, it is considered that a grounding pressure against a tread part can be dispersed. Furthermore, when a product of a maximum thickness of shoulder land parts and $70°C \tan \delta$ of a tread rubber is kept equal to or less than a certain value, it is considered that heat generation by the entire tread part including not only the shoulder parts but also the crown land part can be suppressed.

Then, with cooperation of these features, local deformation from a road surface is absorbed in each land part, and softening of a rubber due to heat generation by the tread rubber can be suppressed, so that it is considered that abrasion resistance at land parts whose deformation becomes large during grounding contact can be improved.

A land ratio R in a grounding surface of the tread part after the tread part is abraded along a tread radius so that the groove depth of the deepest part of the circumferential main grooves becomes 75% of a groove depth in mint condition is preferably 0.90 or more from the viewpoint of securing rigidity of the tread part after abrasion.

A complex elastic modulus at $70°C$ ($70°CE^*$) of the rubber composition constituting the tread part is preferably 6.8 MPa or more from the viewpoint of securing rigidity of the tread part.

It is preferable that the pair of shoulder land parts has no lug grooves.

When the shoulder land parts are not provided with any lug grooves, rigidity of the shoulder land parts can be improved and heat generation can be suppressed, so that it is considered that abrasion resistance of the shoulder land parts is improved.

The crown land part comprises a sipe extending in a tire width direction, and in a case where H2, in mm, represents a depth of a deepest part of the sipe, H2/H1 is preferably 0.25 or more.

When H2/H1 is within the above-described range, it is considered that deterioration of wet grip performance after the middle stage of abrasion, which is accompanied by making the tread part to have a high rigidity, can be suppressed.

A circumferential narrow groove preferably comprises a neck part having a narrow groove width, and a trunk part that is arranged on an inner side in a tire radial direction with respect to the neck part and that has a part with a groove width greater than a maximum groove width of the neck part.

When the circumferential narrow groove is provided with such a neck part and a trunk part, it is considered that deterioration of wet grip performance after the middle stage of abrasion, which is accompanied by making the tread part to have a high rigidity, can be suppressed.

$70°C \tan \delta$ of the rubber composition constituting the tread part is preferably 0.15 or less from the viewpoint of suppressing softening of a rubber due to a rise in temperature of the tread rubber.

A ratio ($70°C \tan \delta/R$) of $70°C \tan \delta$ to a land ratio R in a grounding surface of the tread part is preferably less than 0.15.

When $70°C \tan \delta/R$ is within the above-described range and the land ratio R is increased with an increase of $70°C \tan \delta$ of the tread rubber, deformation of the tread part is decreased, and it is considered that heat generation is suppressed. As a result, softening of the tread part (particularly a cap rubber layer) is reduced, and it is considered that abrasion resistance is improved.

<Definition>

A "tread part" is a part forming a grounding surface of a tire and is a member located on an outer side in a tire radial direction with respect to members forming a tire skeleton with steel or textile material, such as a belt layer, a belt reinforcement layer, a carcass layer, and the like, on a cross-section in the tire radial direction when the tire comprises these members.

A "standardized rim" is a rim, in a standard system including a standard on which the tire is based, defined for each tire by the standard. The standardized rim refers to, for example, a "standard rim" in applicable sizes described in "JATMA YEAR BOOK" in JATMA (Japan Automobile Tyre Manufacturers Association, Inc), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.). JATMA, ETRTO, and TRA are referred to in this order, and when an applicable size is found during reference to the standard, a standardized rim is based on that standard. Besides, if the tire is not defined in the above-described standard system, the "standardized rim" shall refer to a rim having the narrowest rim width among rims that can be rim-assembled to the tire, that can retain internal pressure (that is, do not cause air leakage between the rim and the tire), and that have the smallest rim diameter.

A "standardized internal pressure" is an air pressure, in a standard system including a standard on which the tire is based, defined for each tire by the standard. The standardized internal pressure refers to, for example, the "MAXIMUM AIR PRESSURE" in JATMA, the "maximum value" described in "INFLATION PRESSURE" in ETRTO, or the "maximum value" described in the table "TIRE LOAD LIMITS AT VARIOUS COLD INFLATION PRESSURES" in TRA. Like the standardized rim, JATMA, ETRTO, and TRA are referred to in this order, and when an applicable size is found during reference to the standard, a standardized internal pressure is based on that standard. Besides, in a case of a tire whose size is not defined in the standard, the standardized internal pressure shall refer to a standardized internal pressure (however, provided that the standardized internal pressure is 250 kPa or more) for another tire size for which the standardized rim is described as a standard rim (and which is defined by the standard). In a case where a plurality of standardized internal pressures of 250 kPa or more are described, the standardized internal pressure shall refer to the minimum value among them.

A "standardized state" means a state where a tire is rim-assembled to a standardized rim, filled with air at a standardized internal pressure, and applied with no load. Besides, a "size of each part of a tire" is measured in the standardized state, unless otherwise noted in the present specification.

A "standardized load" means a load, in a standard system including a standard on which the tire is based, defined for each tire by the standard. The standardized load refers to, for example, "MAXIMUN LOAD CAPACITY" in JATMA, "LOAD CAPACITY" in ETRTO, or the "maximum value" described in the table "TIRE LOAD LIMITS AT VARIOUS COLD INFLATION PRESSURES" in TRA. Like the standardized rim and the standardized internal pressure, JATMA, ETRTO, and TRA are referred to in this order, and when an applicable size is found during reference to the standard, a standardized load is based on that standard. Besides, in a case of a tire whose size is not defined in the standard, the standardized load $W_L$ (kg) is calculated as follows. Besides, in the present specification, "maximum load capacity" is synonymous with "standardized load" described above.

$$W_L = 0.000011 \times V + 175$$

$$V = \{(Dt/2)^2 - (Dt/2 - Ht)^2\} \times \pi \times Wt$$

where V represents a virtual volume of the tire, in mm$^3$, Dt represents a tire outer diameter, in mm, Ht represents a tire cross-sectional height, in mm, and Wt represents a tire cross-sectional width, in mm.

A "tread grounding end Te" means a grounding position located on an outermost side in a tire width direction when a standardized load is applied to a tire in a standardized state and the tire comes into contact with a flat surface at a camber angle of 0°. A "tread grounding width TW" means a distance between tread grounding ends Te in a tire width direction.

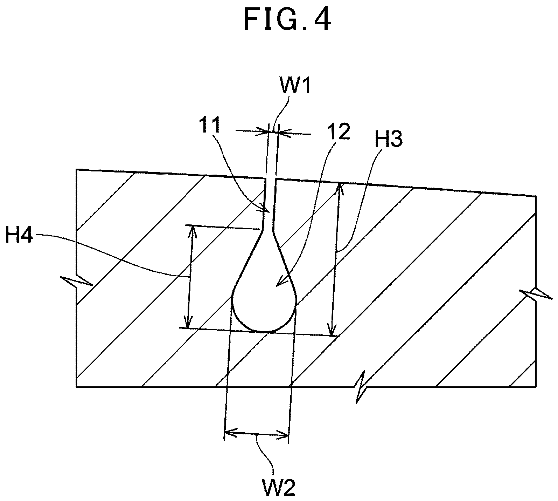

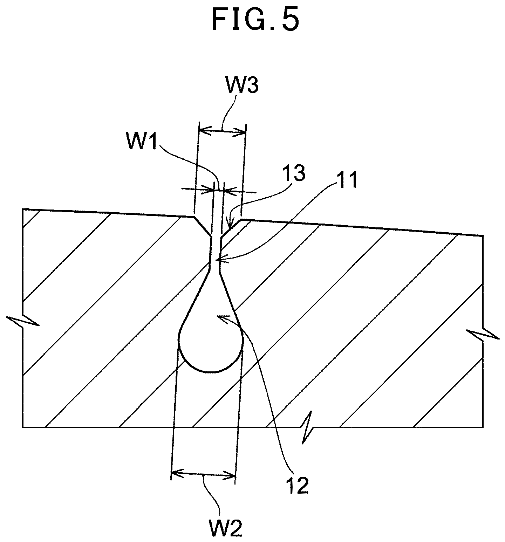

A "circumferential main groove" means a groove that extends continuously in a tire circumferential direction and whose groove width perpendicular to a longitudinal direction has a maximum value W4 that is greater than 2.0% of a tread grounding width TW in mint condition of a tire. Moreover, a "circumferential narrow groove" means a groove that extends continuously in a tire circumferential direction and whose groove width perpendicular to a longitudinal direction (i.e., a minimum groove width W1 of a neck part in FIGS. 4 and 5) is 2.0% or less of the tread grounding width TW in mint condition of a tire.

A "sipe" means a notch-like body that extends in a tire width direction and whose width perpendicular to a longitudinal direction is smaller than 1.5 mm in mint condition of a tire. Moreover, a "lug groove" means a groove-like body that extends in a tire width direction and whose groove width perpendicular to a longitudinal direction is 1.5 mm or more in mint condition of a tire.

A "tread radius" means a radius of curvature of an arc that is formed by a tread surface on a meridian cross section of a tire in a standardized state and that ranges from an intersection point between a tire equatorial plane and a tread surface to an outer side in a tire width direction.

A "land ratio R on a grounding surface of a tread part after abrading a tread part along a tread radius so that a groove depth of a deepest part of circumferential main grooves becomes 75% of a groove depth in mint condition" is a ratio of a total area of a grounding surface touching a flat surface to a total surface area of a tread surface in a state where it is assumed that all grooves are filled when a standardized load is applied to a tire in a standardized state after abrading a tread part along a tread radius so that the groove depth of the deepest part of the circumferential main grooves becomes 75% of the groove depth in mint condition and the tire touches the flat surface at a camber angle of 0° (that is, an area obtained by an outer contour in a grounding shape of the tread part). Here, the term "all grooves" means that they include the above-described circumferential main grooves, circumferential narrow grooves, lug grooves, and sipes.

A "total area of a grounding surface" is calculated from a grounding shape of a tire. The grounding shape is obtained by assembling a tire to a standardized rim, filling the tire with air at a standardized internal pressure, and leaving the tire to stand at 25°C for 24 hours, followed by applying ink to a tread surface, applying a standardized load on the tire to press the tread surface against cardboard (a camber angle is 0°), and performing transcription to a paper. Then, the tire is rotated in 72 degrees increments in a circumferential direction, and the transcription is performed at five sites of the tire. That is, a grounding shape is obtained five times. An actual ground-contacting area is calculated from an average value of areas of the five inked sites.

A "maximum thickness E of a shoulder land part measured in a direction normal to a tire inner cavity surface" means a distance from a tread grounding end Te to a tire inner cavity surface 17 and is calculated by a straight line that passes through the tread grounding end Te and that is perpendicular to the tire inner cavity surface 17 (i.e., a maximum thickness line L). Besides, E includes thicknesses of a belt layer, a carcass, and an inner liner.

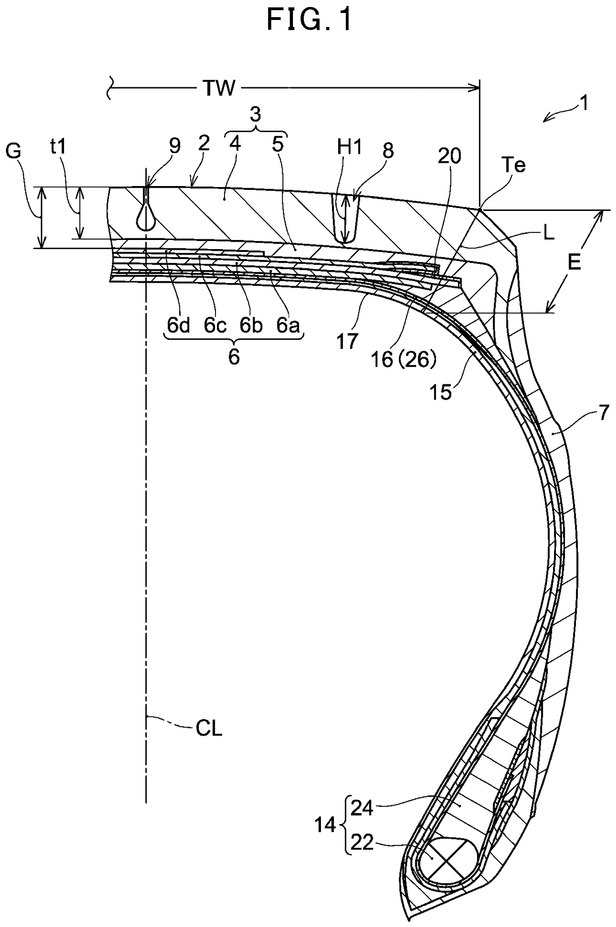

A "thickness of a tread part" refers to a thickness of the tread part on a tire center line measured in a state where a tire cut along a surface including a tire rotation axis is held by a standardized rim. Besides, an end on an inner side in a tire radial direction in a thickness of the entire tread part is an interface of a rubber composition constituting the tread part on the inner side in the tire radial direction. In a case where the tire comprises a belt reinforcing layer, a belt layer, and a carcass layer, among them, the thickness of the tread part becomes a thickness of the entire rubber layer on the outer side in the tire radial direction with respect to a layer on the outermost side in the tire radial direction. Besides, in a case where a circumferential groove is provided on a tire equatorial plane, the thickness of the entire tread is measured on the assumption that this circumferential groove is filled. For example, in FIG. 1, G corresponds to the thickness of the tread part. A thickness t1 of a cap rubber layer constituting the tread part and thicknesses of other rubber layers are also measured in the same manner.

A "groove depth H1 of a deepest part of circumferential main grooves" is calculated by a distance between a tread surface and a deepest part of groove bottoms of the circumferential main grooves. Besides, the deepest part of groove bottoms of the circumferential main grooves refers to a deepest part of a groove bottom of a circumferential main groove having the largest groove depth, of circumferential main grooves adjacent to crown land parts.

A "depth H2 of a deepest part of sipes" is calculated by a distance between a tread surface and a deepest part of the sipes. Besides, the deepest part of the sipes refers to a deepest part of a sipe having the largest depth, of sipes present on crown land parts.

A "groove depth H3 of a deepest part of circumferential narrow grooves" is calculated by a distance between a tread surface and a deepest part of groove bottoms of the circumferential narrow grooves. Besides, the deepest part of groove bottoms of the circumferential narrow grooves refers to a deepest part of a groove bottom of a circumferential narrow groove having the largest groove depth, of circumferential narrow grooves present on crown land parts.

A "softening agent" is a material giving a rubber component plasticity and is a component extracted from a rubber composition using acetone. Examples of the softening agent includes a softening agent that is liquid (in a liquid state) at 25°C and a softening agent that is solid at 25°C. However, the examples of the softening agent shall not include wax and stearic acid commonly used in the tire industry.

<Measuring method>

"70°C tan $\delta$" is a loss tangent measured, using a dynamic viscoelasticity measuring device (for example, EPLEXOR series manufactured by gabo Systemtechnik GmbH), under a condition of a temperature at 70°C, a frequency of 10 Hz, an initial strain of 10%, a dynamic strain of $\pm 1\%$, and an extension mode. A sample for measurement of 70°C tan $\delta$ is a vulcanized rubber composition having a length of 20 mm, a width of 4 mm, and a thickness of 1 mm. In a case where the sample is prepared by being cut out from a tire, the sample is cut out from a tread part of the tire so that the tire circumferential direction becomes a long side and the tire radial direction becomes a thickness direction.

"70°CE*" is a complex elastic modulus measured, using a dynamic viscoelasticity measuring device (for example, EPLEXOR series manufactured by gabo Systemtechnik GmbH), under a condition of a temperature at 70°C, a frequency of 10 Hz, an initial strain of 10%, a dynamic strain of ±1%, and an extension mode. A sample for measurement of 70°CE* is prepared in the same manner as in the case of 70°C tan δ.

The tire that is one embodiment of the present invention will be described below by appropriately using the drawings. However, the drawings used are ones merely showing one embodiment specifically. The invention is defined by the claims.

[Tire]

FIG. 1 is a cross-sectional view showing a part of a heavy-duty tire relating to one embodiment of the present invention. In FIG, 1, a vertical direction is a radial direction of a heavy-duty tire 1, a horizontal direction is a tire width direction of the heavy-duty tire 1, and a direction perpendicular to a paper surface is a circumferential direction of the heavy-duty tire 1. In FIG. 1, CL represents a tire equator (tire center line) of the heavy-duty tire 1. A shape of this heavy-duty tire 1 is symmetrical to CL excluding a tread pattern.

This heavy-duty tire 1 comprises a tread part 3, a belt layer 6, a sidewall 7, beads 14, an inner liner 15, and a carcass 16. The inner liner 15 is located on the inner side of the carcass 16. The tread part 3 forms a tread surface 2 that contacts a road surface. Two circumferential main grooves 8 and a circumferential narrow groove 9 that extend continuously in the tire circumferential direction are formed on the tread surface 2.

Each of the beads 14 comprises a bead core 22, and an apex 24 extending from this bead core 22 outward in the radial direction. The bead core 22 is ring-shaped and comprises a wound and non-stretchable wire. The apex 24 tapers off outward in the tire radial direction.

The carcass 16 consists of a carcass ply 26. The carcass ply 26 bridges the beads 14 on both sides and extends along the tread part 3 and the sidewall 7. The carcass ply 26 is folded back around the bead core 22 from the inner side toward the outer side in the tire width direction. The carcass ply 26 consists of parallelly-arranged many cords and a topping rubber. The carcass 16 may be formed of two or more carcass plies 26.

The belt layer 6 extends in the tire width direction. The belt layer 6 is located on the inner side of the tread part 3 in the tire radial direction. The belt layer 6 is located on the outer side of the carcass 16 in the tire radial direction and reinforces the carcass 16.

The belt layer 6 is formed of four belt plies including a first belt layer 6a, a second belt layer 6b, a third belt layer 6c, and a fourth belt layer 6d that are laminated in turn from the inner side in the tire radial direction. The first belt layer 6a is laminated on the carcass 16. In FIG. 1, the second belt layer 6b has the largest width of the above-described four layers in a tire rotation axis direction, and the fourth belt layer 6d has the smallest width of the above-described four layers in the tire rotation axis direction, but the present embodiment is not limited to such an aspect.

The tread part 3 comprises a cap rubber layer 4 and a base rubber layer 5, the outer surface of the cap rubber layer 4 constituting the tread surface 2 and the base rubber layer 5 being adjacent to the inner side of the cap rubber layer 4 in the tire radial direction. Moreover, as long as the effects of the present invention are achieved, one or more rubber layers may be further provided between the base rubber layer 5 and the belt layer 6.

The cap rubber layer 4 extends up to the both outer ends of the tread part 3 in the tire rotation axis direction. A covering rubber 20 covers each of ends of the second belt layer 6b and the third belt layer 6c.

A thickness G of the tread part is preferably 15.0 mm or more, more preferably 16.0 mm or more, further preferably 17.0 mm or more, particularly preferably 18.0 mm or more. On the other hand, G is preferably 23.0 mm or less, more preferably 22.0 mm or less, further preferably 21.0 mm or less, particularly preferably 20.0 mm or less.

A thickness t1 of the cap rubber layer is preferably 11.5 mm or more, more preferably 12.5 mm or more, further preferably 13.5 mm or more, particularly preferably 14.5 mm or more. On the other hand, t1 is preferably 19.5 mm or less, more preferably 18.5 mm or less, further preferably 17.5 mm or less, particularly preferably 16.5 mm or less.

t1/G is preferably 0.65 or more, more preferably 0.70 or more, further preferably 0.73 or more, further preferably 0.76 or more, further preferably 0.79 or more, particularly preferably 0.80 or more, from the viewpoint of the effects of the present invention. On the other hand, an upper limit value of t1/G is not particularly limited, and may be 1.0, preferably less than 1.0, more preferably 0.95 or less, further preferably 0.90 or less, further preferably 0.85 or less, particularly preferably 0.83 or less.

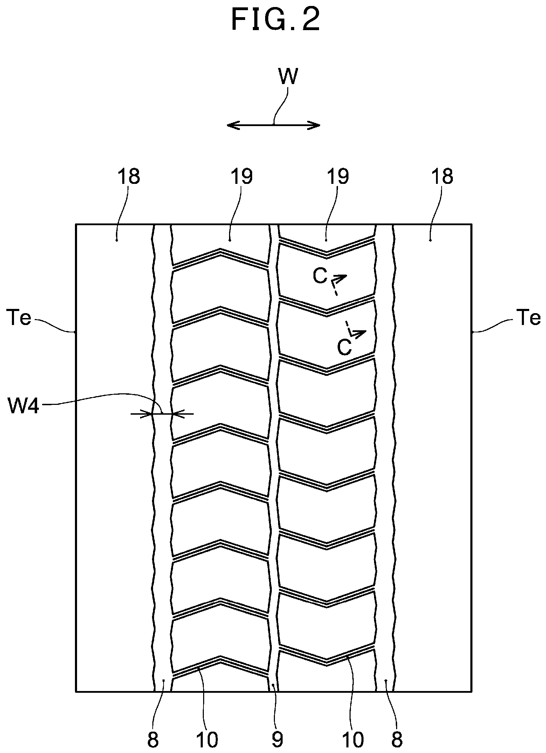

FIG. 2 shows one example of a developed view in which a tread pattern of the heavy-duty tire relating to one embodiment of the present invention is developed on a plane.

The tread part 3 comprises land parts partitioned off, in the tire width direction W, by two circumferential grooves 8 extending continuously in the tire circumferential direction. Shoulder land parts 18 are a pair of land parts each of which is formed between a circumferential main groove 8 and a tread grounding end Te. Crown land parts 19 are land parts formed between the pair of the shoulder land parts 18.

The circumferential main grooves 8 extend in a zigzag shape while a centerline in a width direction of each circumferential main groove is oscillating transversely. Here, the phrase "extends in a zigzag shape" is intended to mean that the center in the width direction of the circumferential main groove extends in the tire circumferential direction while the center is oscillating in the tire width direction. Accordingly, the circumferential main grooves according to the present embodiment include not only a configuration in which a linear-shaped groove bends repeatedly but also a configuration in which a curve-shaped groove curves repeatedly in a wavy shape. Besides, the circumferential main grooves 8 may have a linear shape, besides the zigzag shape.

A groove depth H1 of a deepest part of the circumferential main grooves 8 is 15.0 mm or less, preferably 14.8 mm or less, more preferably 14.6 mm or less, further preferably 14.4 mm or less, particularly preferably 14.2 mm or less, from the viewpoint of the effects of the present invention. On the other hand, H1 is preferably 10.0 mm or more, more preferably 11.0 mm or more, further preferably 12.0 mm or more.

H1/G is preferably 0.60 or more, more preferably 0.62 or more, further preferably 0.64 or more, from the viewpoint of the effects of the present invention. On the other hand, H1/G is preferably 0.80 or less, more preferably 0.78 or less, further preferably 0.76 or less, further preferably 0.74 or less.

A maximum groove width W4 of the circumferential main grooves is preferably 8.0 mm or more, more preferably 8.2 mm or more, further preferably 8.4 mm or more. On the other hand, W4 is preferably 15.0 mm or less, more preferably 14.5 mm or less, further preferably 14.0 mm or less.

In FIG. 2, the crown land part 19 comprise one circumferential narrow groove 9 extending continuously in the tire circumferential direction, but the present embodiment is not limited to such an aspect, and the crown land parts 19 may comprise a plurality of circumferential narrow grooves 9. Moreover, like the circumferential main grooves 8, the circumferential narrow groove 9 may have a linear shape, besides the zigzag shape.

Each crown land part 19 comprises a sipe inclined in the tire circumferential direction or in the tire width direction. Specifically, the sipe inclined in the tire circumferential direction or in the tire width direction extends while being bent or curved in a process of progress in the width direction.

In FIG. 2, each crown land part 19 is provided with a plurality of center sipes 10 each of which communicates with a circumferential main groove 8 and the circumferential narrow groove 9 and that are bent in a process of progress from one end toward the other end in the width direction. The center sipes 10 bends so that a direction in which they extend changes in their central parts in the width direction. Specifically, each of the center sipes 10 inclines to shift toward one side in the tire circumferential direction with progress from one end of each center sipe 10 in the width direction to its central part in the width direction. Then, each of the center sipes 10 bends at its central part in the width direction and inclines in the reverse direction to shift toward the other side in the tire circumferential direction with progress from the central part of each center sipe 10 in the width direction to the other end of each center sipe 10 in the width direction. In this way, when the crown land parts 19 are provided with sipes inclined in the tire circumferential direction or in the tire width direction, blocks can support with each other not only in a front-back direction but also in a transverse direction, thereby enabling contribution to not only an improvement of rigidity in the tire circumferential direction but also an improvement of rigidity in the tire width direction, so that it is considered that abrasion resistance can be improved.

In a case where H2, in mm, represents a depth of a deepest part of each crown sipe 10, H2/H1 is preferably 0.25 or more, preferably 0.30 or more, further preferably 0.33 or more. When H2/H1 is within the above-described ranges, it is considered that deterioration of wet grip performance after the middle stage of abrasion, which is accompanied by making the tread part to have a high rigidity, can be suppressed. On the other hand, H2/H1 is preferably 1.0 or less, more preferably 0.95 or less.

In FIG. 2, the shoulder land parts 18 are not provided with any lug grooves and sipes. When the shoulder land parts are not provided with any lug grooves, rigidity of the shoulder land parts is improved and heat generation can be suppressed, so that it is considered that abrasion resistance of the shoulder land parts is improved.

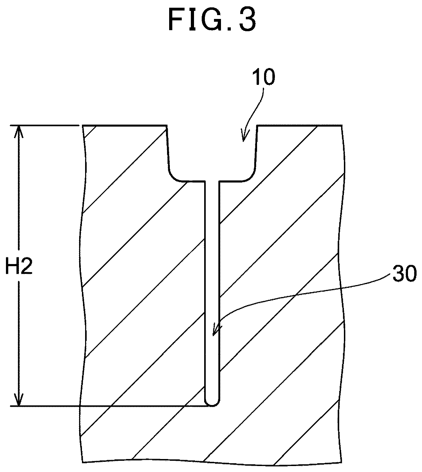

FIG. 3 shows a C-C line cross-sectional view of a crown sipe 10 shown in FIG. 2. As shown in FIG. 3, the crown sipe 10 comprises an opening part whose groove width gradually decreases toward the inner side in the tire radial direction, and a sipe part 30 located on its inner side in the tire radial direction, but the present embodiment is not limited to such an aspect.

FIG. 4 shows an enlarged circumferential narrow groove 9. In FIG. 3, the cross-section of the circumferential narrow groove 9 presents a flask-like shape. Specifically, the circumferential narrow groove 9 has a neck part 11 and a trunk part 12 that is arranged on the inner side in the tire radial direction with respect to the neck part and that has a part whose groove width is larger than a maximum groove width of the neck part. Even in a case where a large load is applied to the tread part 3, stress applied to sidewalls of the land parts is relieved by such a cross-sectional shape.

In the present embodiment, in a case of a tire in mint condition or at the initial stage of abrasion of the tread part 3, a part of the circumferential narrow groove 9 appearing on a grounding surface is the neck part 11. Since the neck part can be blocked by a load applied on the tread part 3, rigidity of the tread part 3 in the tire radial direction is increased. On the other hand, as abrasion of the tread part 3 progresses, the grounding surface moves to the inner side in the tire radial direction, and an opening of the circumferential narrow groove 9 transits from the neck part to the trunk part. Accordingly, the progression of abrasion results in enlargement of the width of the circumferential narrow groove 9, thereby keeping drainage performance of the tread part 3 high after the middle stage of abrasion.

Although the groove width of the neck part 11 is fixed with its minimum groove width W1 and is constant in FIG. 4, the neck part may have a part whose groove width is larger than W1 as long as the effects of the present invention are exhibited. Accordingly, the cross-sectional shape of the neck part may be a zigzag shape besides a linear shape as illustrated in FIG. 3. Here, the wording "zigzag shape" has the same meaning as described above. A circumferential narrow groove having a groove width of its neck part being constant with its minimum groove width is cited as one preferred embodiment.

Moreover, the trunk part 12 is one having a part whose groove width is larger than the maximum groove width of the neck part 11. Here, the wording "having a part whose groove width is larger than the maximum groove width of the neck part" means that the trunk part is configured to have a wider width than the maximum groove width of the neck part so that the effects of the present invention can be achieved. Accordingly, the groove width of the trunk part is not particularly limited as long as the trunk part includes a part larger than the maximum groove width of the neck part so that the effects of the present invention can be achieved. For example, a part of the groove width of the trunk part may have a narrower part than the maximum groove width of the neck part, or the trunk part may be configured to consist of a part in which the groove width of the trunk part is larger than the groove width of the neck part. Since the groove width of the neck part 11 is fixed with its minimum groove width W1 in FIG. 3, the trunk part 12 is composed of a part whose groove width is larger than the groove width of the neck part 11.

A minimum groove width W1 of the neck part 11 is preferably 0.5 mm or more, more preferably 0.7 mm or more, further preferably 0.9 mm or more, particularly preferably 1.0 mm or more. When W1 is within the above-described ranges, water becomes easy to flow from the neck part to the trunk part during wet running, so that it becomes possible to easily secure a sufficient drainage performance. On the other hand, W1 is preferably 2.0 mm or less, more preferably 1.9 mm or less, further preferably 1.8 mm or less, particularly preferably 1.7 mm or less. When W1 is within the above-described ranges, the neck part becomes easily blocked by grounding pressure at the initial stage of abrasion when a load is applied on the tread part 3, so that rigidity of the tread part 3 in the tire axial direction can be increased. Moreover, a rubber volume of the tread part 3 is easily secured, thereby improving abrasion resistance of the heavy-duty tire 1.

A maximum groove width W2 of the trunk part 12 is preferably 2.0 mm or more, more preferably 3.0 mm or more, further preferably 4.0 mm or more. When W2 is within the above-described ranges, a width of the flask-like circumferential groove 9 is easily secured even at the end stage of abrasion, so that it becomes possible to easily secure a sufficient drainage performance. On the other hand, W2 is preferably 12.0 mm or less, more preferably 11.0 mm or less, further preferably 10.0 mm or less, further preferably 9.0 mm or less, particularly preferably 8.0 mm or less. When W2 is within the above-described ranges, a rubber volume of the tread part 3 is easily secured, thereby improving abrasion resistance of the heavy-duty tire 1.

W2/W1 is preferably 2.0 or more, more preferably 2.5 or more, further preferably 3.0 or more, particularly preferably 3.5 or more. When W2/W1 is within the above-described ranges, a width of the flask-like circumferential groove 9 is easily secured even at the end stage of abrasion, so that it becomes possible to easily secure a sufficient drainage performance. On the other hand, W2/W1 is preferably 8.0 or less, more preferably 7.5 or less, further preferably 7.0 or less, particularly preferably 6.5 or less. When W2/W1 is within the above-described ranges, a rubber volume of the tread part 3 is easily secured, thereby improving abrasion resistance of the heavy-duty tire 1.

In a case where H3, in mm, represents a groove depth of a deepest part of circumferential narrow grooves 9, and H4, in mm, represents a minimum length from a groove bottom of the circumferential narrow groove 9 to a neck part 11 in the tire radial direction, H4/H3 is preferably 0.25 or more, more preferably 0.33 or more, further preferably 0.40 or more. When H4/H3 is within the above-described ranges, a groove volume of the trunk part is easily secured, so that it becomes possible to easily secure a sufficient drainage performance at the end stage of abrasion. Moreover, H4/H3 is preferably 0.75 or less, more preferably 0.73 or less. When H4/H3 is within the above-described ranges, rigidity of the tread part 3 in the tire axial direction can be increased at the initial stage of abrasion. Moreover, a rubber volume of the tread part 3 is easily secured, thereby improving abrasion resistance of the heavy-duty tire 1.

FIG. 5 shows a variation of the circumferential narrow groove 9. Regarding the variation, for parts that are not described below, the above-described configurations of the circumferential narrow groove can be adopted.

In FIG. 5, the circumferential narrow groove is one comprising an opening part (tapered part) 13 that is arranged on the outer side of the neck part 11 in the tire radial direction and whose groove width widens in a tapered shape. Due to the tapered part 13, a volume of the circumferential narrow groove 9 is increased at the initial stage of abrasion. Moreover, due to the tapered part 13, an amount of water flowing from the neck part to the trunk part is increased, thereby improving drainage performance of the tread part 3.

The maximum groove width W2 of the trunk part is preferably larger than a maximum groove width W3 of the tapered part. As a result, it becomes easy to secure a groove volume of the circumferential narrow groove 9 in the trunk part, and it becomes possible to easily secure a sufficient drainage performance of the tread part 3 at the end stage of abrasion.

A land ratio R in a grounding surface of the tread part after the tread part is abraded along a tread radius so that a groove depth of a deepest part of circumferential main grooves becomes 75% of a groove depth in mint condition is preferably 0.85 or more, more preferably 0.87 or more, further preferably 0.90 or more, particularly preferably 0.91 or more, from the viewpoint of the effects of the present invention. Moreover, the land ratio R is preferably 0.98 or less, more preferably 0.97 or less, further preferably 0.96 or less.

A maximum thickness E of a shoulder land part measured in a direction normal to a tire inner cavity surface 17 is preferably 32.0 mm or more, more preferably 33.0 mm or more, further preferably 34.0 mm or more. On the other hand, E is preferably 45.0 mm or less, more preferably 44.0 mm or less, further preferably 43.0 mm or less.

A tan $\delta$ at 70°C (70°C tan $\delta$) of the rubber composition constituting the tread part is preferably 0.19 or less, more preferably 0.17 or less, further preferably 0.16 or less, further preferably 0.15 or less, particularly preferably 0.14 or less, from the viewpoint of suppressing softening of a rubber due to a rise in temperature of the tread part. On the other hand, it is preferably 0.08 or more, more preferably 0.09 or more, further preferably 0.10 or more, from the viewpoint of absorbing deformation from a road surface. In addition, when the tread part is composed of two or more rubber layers, the above-described 70°C tan $\delta$ shall refer to 70°C tan $\delta$ of a rubber composition constituting a cap rubber layer.

Besides, 70°C tan $\delta$ of the rubber composition can be adjusted depending on types and compounding amounts of a rubber component, a filler, and a softening agent that are described below, as appropriate.

A product of E and 70°C tan $\delta$ (E $\times$ 70°C tan $\delta$) is 7.5 or less, preferably 7.0 or less, more preferably 6.5 or less, further preferably 6.0 or less, from the viewpoint of the effects of the present invention. Moreover, a lower limit value of E $\times$ 70°C tan $\delta$ is, but not particularly limited to, preferably 2.5 or more, more preferably 3.0 or more, further preferably 3.5 or more, particularly preferably 4.0 or more.

A complex elastic modulus at 70°C (70°CE*) of the rubber composition constituting the tread part is preferably 6.0 MPa or more, more preferably 6.4 MPa or more, further preferably 6.8 MPa or more, further preferably 7.0 MPa or more, particularly preferably 7.2 MPa or more, from the viewpoint of securing rigidity of the tread part. On the other hand, 70°CE* is preferably 10.0 MPa or less, more preferably 9.5 MPa or less, further preferably 9.0 MPa or less, from the viewpoint of the effects of the present invention. In addition, when the tread part is composed of two or more rubber layers, the above-described 70°CE* shall refer to 70°CE* of a rubber composition constituting a cap rubber layer.

Besides, 70°CE* of the rubber composition can be adjusted depending on types and compounding amounts of a rubber component, a filler, a softening agent, and the like and that are described below, as appropriate.

70°C tan $\delta$/R is preferably less than 0.19, more preferably less than 0.17, further preferably less than 0.15, particularly preferably less than 0.14. When 70°C tan $\delta$/R is within the above-described ranges and the land ratio R is increased with an increase of 70°C tan $\delta$ of the tread rubber, deformation of the tread part is decreased, and it is considered that heat generation is suppressed. On the other hand, a lower limit value of 70°C tan $\delta$/R is, but not particularly limited to, preferably 0.030 or more, more preferably 0.040 or more, further preferably 0.050 or more, particularly preferably 0.060 or more.

[Rubber composition]

The rubber composition constituting the tread part relating to the present embodiment (which is hereinafter referred to as the "rubber composition relating to the present embodiment") will be described below, though the description shall also be applicable to any rubber layer of the tread part, unless otherwise noted.

A rubber component that can be used in the present embodiment is not particularly limited, and a cross-linkable rubber component commonly used in the tire industry can be used, examples of which include, for example, diene-based rubbers such as a natural rubber (NR), an isoprene rubber (IR), a styrene-butadiene rubber (SBR), a butadiene rubber (BR), a styrene-isoprene rubber (SIR), a styrene-isoprene-butadiene rubber (SIBR), a chloroprene rubber (CR), an acrylonitrile-butadiene rubber (NBR), and the like; and non-diene-based rubbers such as a butyl rubber (IIR), a halogenated butyl rubber, an ethylene propylene rubber, a polynorbornene rubber, a silicone rubber, a polyethylene chloride rubber, a fluororubber (FKM), an acrylic rubber (ACM), a hydrin rubber, and the like. These rubber components may be used alone, or two or more thereof may be used in combination.

<Filler>

For the rubber composition relating to the present embodiment, a filler comprising carbon black and/or silica is appropriately used.

Carbon black is not particularly limited, and those common in the tire industry can be used as appropriate, examples of which include, for example, GPF, FEF, HAF, ISAF, SAF, and the like. These carbon black may be used alone, or two or more thereof may be used in combination.

A content of carbon black based on 100 parts by mass of the rubber component can be, but not particularly limited to, for example, 1 to 150 parts by mass, 5 to 120 parts by mass, or 10 to 100 parts by mass, depending on the purpose of compounding.

Silica is not particularly limited, and those common in the tire industry can be used, such as, for example, silica prepared by a dry process (anhydrous silica), silica prepared by a wet process (hydrous silica), and the like. These silica may be used alone, or two or more thereof may be used in combination.

A content of silica based on 100 parts by mass of the rubber component can be, but not particularly limited to, for example, 1 to 150 parts by mass, 5 to 120 parts by mass, or 10 to 100 parts by mass, depending on the purpose of compounding.

Fillers other than silica and carbon black are not particularly limited, and those conventionally and commonly used in the tire industry can be compounded, such as, for example, aluminum hydroxide, alumina (aluminum oxide), calcium carbonate, magnesium sulfate, talc, clay, biochar, and the like. These other fillers may be used alone, or two or more thereof may be used in combination.

Silica is preferably used in combination with a silane coupling agent. The silane coupling agent is not particularly limited, and any silane coupling agent conventionally used in combination with silica in the tire industry can be used. Examples of such a silane coupling agent include, for example, sulfide-based silane coupling agents, mercapto-based silane coupling agents, thioester-based silane coupling agents, amino-based silane coupling agents, glycidoxy-based silane coupling agents, and the like.

<Other compounding agents>

Besides the above-described components, the rubber composition relating to the present embodiment can appropriately comprise compounding agents conventionally and commonly used in the tire industry, such as, for example, a softening agent, wax, stearic acid, zinc oxide, an antioxidant, a vulcanizing agent, a vulcanization accelerator, and the like.

Examples of the softening agent include, for example, a resin component, oil, a liquid polymer, and the like.

Examples of the resin component include, but not particularly limited to, a petroleum resin, a terpene-based resin, a rosin-based resin, a phenol-based resin, and the like which are commonly used in the tire industry, and the resin component may be those obtained by hydrogenating these resins. Examples of the petroleum resin include a C5-based petroleum resin, an aromatic petroleum resin, a C5/C9-based petroleum resin, and the like. These resin components may be used alone, or two or more thereof may be used in combination.

Examples of oil include, for example, process oils, vegetable oils and fats, animal oils and fats, and the like. Examples of the process oils include paraffinic process oils, naphthenic process oils, aromatic process oils, and the like. Moreover, as an environmental measure, process oils each having a low content of a polycyclic aromatic compound (PCA) can also be used. Examples of the process oils each having a low content of a PCA include mild extraction solvates (MES), treated distillate aromatic extracts (TDAE), heavy naphthenic oil, and the like.

The liquid polymer is not particularly limited as long as it is a polymer in a liquid state at normal temperature (25°C), examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. The liquid polymer may be those obtained by hydrogenating these rubbers or a modified liquid polymer modified at a main chain and/or a terminal thereof with a modifying group (preferably a terminal-modified liquid polymer). These liquid polymers may be used alone, or two or more thereof may be used in combination.

A content of a softening agent based on 100 parts by mass of the rubber component can be, but not particularly limited to, for example, 1 to 100 parts by mass, 5 to 75 parts by mass, or 10 to 50 parts by mass, depending on the purpose of compounding.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like.

Examples of the vulcanization accelerator include, for example, a sulfenamide-based vulcanization accelerator, a thiazole-based vulcanization accelerator, a thiuram-based vulcanization accelerator, a guanidine-based vulcanization accelerator, a dithiocarbamic acid salt-based vulcanization accelerator, caprolactam disulfide, and the like. These vulcanization accelerators may be used alone, or two or more thereof may be used in combination.

[Production of rubber composition and tire]

The rubber composition relating to the present embodiment can be produced by a known method. For example, it can be produced by kneading the respective above-described components with a rubber kneading machine such as an open roll, a sealed type kneader (a Banbury mixer, a kneader, and the like), and the like.

The kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step can also be divided into multiple steps as necessary.

Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step. Examples of vulcanization conditions include, but not particularly limited to, for example, a method of vulcanizing at 150°C to 200°C for 10 to 30 minutes.

The tire comprising the tread part can be produced using the above-described rubber composition by a usual method. That is, the tire can be produced by extruding each of unvulcanized rubber compositions, in which the above-described components are compounded for a rubber component as appropriate, into a shape of each rubber layer of the tread part with an extruder equipped with a mouthpiece having a predetermined shape, attaching it together with other tire members on a tire forming machine to form an unvulcanized tire by a usual method, followed by heating and pressurizing this unvulcanized tire in a vulcanizing machine. Examples of a vulcanization condition include, but not particularly limited to, for example, a method of vulcanizing at 150°C to 200°C for 10 to 30 minutes.

[Application of tire]

The tire relating to the present embodiment can be appropriately used as a heavy-duty tire. Besides, the heavy-duty tire refers to a tire that is presupposed to be mounted to a car running with four wheels and that has a maximum load capacity of 1000 kg or more. The maximum load capacity of the heavy-duty tire is preferably 1200 kg or more, more preferably 1400 kg or more.

EXAMPLES

Examples considered to be preferable in implementing the present invention (Examples) will be described below, though the scope of the present invention is not limited to Examples. Considering a heavy-duty tire that forms a basic structure shown in FIG. 1, has a tread pattern shown in FIG. 2, and comprises a circumferential narrow groove shown in FIG. 4 (size: 275/70R22.5, rim: 22.5×7.50, internal pressure: 900 kPa), results calculated based on the following evaluation methods are shown in Table 1. Besides, W1 of a circumferential narrow groove is 1.0 mm, W2 is 4.0 mm, H3 is 14.0 mm, and H4 is 10 mm; a maximum groove width W4 of a circumferential main groove is 9.0 mm; a tread grounding width TW is 228 mm; a thickness G of a tread part is 19.0 mm; and a thickness t1 of a cap rubber layer is 15.5 mm.

<Abrasion resistance>

Each test tire is assembled to a rim, and this rim-assembled tire is mounted on a rear wheel of a bus that is a vehicle for testing. A test driver drives this test vehicle to run 10000 km on a public road, and an amount of abrasion after running is measured. An inverse value of the amount of abrasion is indicated as an index with a value of Comparative example 1 being as 100 (abrasion resistance index). The results show that the larger the index is, the better the abrasion resistance is.

(Abrasion resistance index) = (amount of abrasion of tire in Comparative example 4) / (amount of abrasion of each test tire) × 100.

Table 1

| | Example | | | | Comparative example | | | |
|---|---|---|---|---|---|---|---|---|
| | 1 | 2 | 3 | 4 | 1 | 2 | 3 | 4 |
| The number of circumferential main grooves | 2 | 2 | 2 | 2 | 3 | 3 | 2 | 2 |
| The number of circumferential narrow grooves in crown land part | 1 | 1 | 1 | 1 | 0 | 0 | 1 | 1 |
| H1 (mm) | 14.0 | 14.0 | 14.0 | 14.0 | 14.0 | 14.0 | 14.0 | 17.0 |
| E (mm) | 40 | 45 | 40 | 40 | 40 | 50 | 50 | 40 |
| 70°C tan δ | 0.12 | 0.12 | 0.12 | 0.12 | 0.12 | 0.16 | 0.16 | 0.12 |
| E × 70°C tan δ | 4.8 | 5.4 | 4.8 | 4.8 | 4.8 | 8.0 | 8.0 | 4.8 |
| Land ratio R | 0.90 | 0.90 | 0.95 | 0.95 | 0.85 | 0.85 | 0.90 | 0.90 |

(continued)

| | Example | | | | Comparative example | | | |
|---|---|---|---|---|---|---|---|---|
| | 1 | 2 | 3 | 4 | 1 | 2 | 3 | 4 |
| 70°CE* (MPa) | 7.5 | 7.5 | 7.5 | 7.5 | 7.5 | 9.5 | 9.5 | 7.5 |
| H2/H1 | 1.00 | 1.00 | 0.50 | 1.00 | 1.00 | 1.00 | 1.00 | 1.00 |
| 70°C tan $\delta$/R | 0.13 | 0.13 | 0.13 | 0.13 | 0.14 | 0.19 | 0.18 | 0.13 |
| Abrasion resistance index | 105 | 103 | 114 | 110 | 95 | 90 | 95 | 100 |

REFERENCE SIGNS LIST

| | |
|---|---|
| 1 | Heavy-duty tire |
| 2 | Tread surface |
| 3 | Tread part |
| 4 | Cap rubber layer |
| 5 | Base rubber layer |
| 6 | Belt layer |
| 7 | Sidewall |
| 8 | Circumferential main groove |
| 9 | Circumferential narrow groove |
| 10 | Crown sipe |
| 11 | Neck part |
| 12 | Trunk part |
| 13 | Tapered part |
| 14 | Bead |
| 15 | Inner liner |
| 16 | Carcass |
| 17 | Tire inner cavity surface |
| 18 | Shoulder land part |
| 19 | Crown land part |
| 20 | Covering rubber |
| 22 | Bead core |
| 24 | Apex |
| 26 | Carcass ply |
| 30 | Sipe part |
| CL | Tire equator |
| W | Tire width direction |
| Te | Tread grounding end |
| TW | Tread grounding width |
| E | Maximum thickness of shoulder land part |
| L | Maximum thickness line of shoulder land part |
| W1 | Minimum groove width of neck part |
| W2 | Maximum groove width of trunk part |
| W3 | Maximum groove width of tapered part |
| H1 | Groove depth of deepest part of circumferential main grooves |
| H2 | Depth of deepest part of crown sipe |
| H3 | Depth of flask-like circumferential groove |
| H4 | Distance from groove bottom of flask-like circumferential groove to neck part |

**Claims**

1. A heavy-duty tire (1) comprising a tread part (3),

    wherein the tread part (3) comprises

two circumferential main grooves (8) extending continuously in a tire circumferential direction,

a pair of shoulder land parts (18) partitioned off by the circumferential main grooves (8) and ground-contacting ends, and

a crown land part (19) located between the pair of shoulder land parts (18),

wherein the crown land part (19) comprises one or more circumferential narrow grooves (9) extending continuously in the tire circumferential direction, and

wherein, in a case where H1, in mm, represents a groove depth of a deepest part of the circumferential main grooves (8), E, in mm, represents a maximum thickness of the shoulder land parts (18) measured in a direction normal to a tire inner cavity surface, and 70°C tan $\delta$ represents a tan $\delta$ at 70°C of a rubber composition constituting the tread part (3), H1 is 15.0 or less, and E $\times$ 70°C tan $\delta$ is 7.5 or less, wherein the 70° C tan $\delta$ is the loss tangent measured under a condition of a temperature at 70°C, a frequency of 10 Hz, an initial strain of 10%, a dynamic strain of $\pm 1$ % and extension mode, and

wherein a land ratio R in a grounding surface of the tread part (3) after the tread part (3) is abraded along a tread radius so that the groove depth of the deepest part of the circumferential main grooves (8) becomes 75% of a groove depth in mint condition is 0.90 or more.

2. The heavy-duty tire (1) of claim 1, wherein a complex elastic modulus at 70°C (70°CE\*) of the rubber composition constituting the tread part (3) is 6.8 MPa or more, wherein the complex elastic modulus at 70°C is the complex elastic modulus measured under a condition of a temperature at 70°C, a frequency of 10 Hz, an initial strain of 10%, a dynamic strain of $\pm 1$ % and extension mode.

3. The heavy-duty tire (1) of any one of claims 1 or 2, wherein the pair of shoulder land parts (18) has no lug grooves.

4. The heavy-duty tire (1) of any one of claims 1 to 3, wherein the crown land part (18) comprises sipes each extending in a tire width direction, and in a case where H2, in mm, represents a depth of a deepest part of the sipe, H2/H1 is 0.25 or more.

5. The heavy-duty tire (1) of any one of claims 1 to 4, wherein the circumferential narrow groove (9) comprises

a neck part (11) having a narrow groove width, and

a trunk part (12) that is arranged on an inner side in a tire radial direction with respect to the neck part (11) and that has a part with a groove width greater than a maximum groove width of the neck part (11).

6. The heavy-duty tire (1) of any one of claims 1 to 5, wherein 70°C tan $\delta$ is 0.15 or less.

7. The heavy-duty tire (1) of any one of claims 1 to 6, wherein, for the 70°C tan $\delta$ and the land ratio R, 70°C tan $\delta$/R is less than 0.15.

8. The heavy-duty tire (1) of any one of claims 1 to 7, wherein, in a case where G, in mm, represents a thickness of the tread part (3), and t1, in mm, represents a thickness of a cap rubber layer (4), t1/G is 0.70 or more and 0.95 or less.

9. The heavy-duty tire (1) of any one of claims 4 to 8, wherein one or more of the sipes bend in a process of progress from one end toward the other end in the width direction.

10. The heavy-duty tire (1) of any one of claims 4 to 9, wherein one or more of the sipes (10) comprise

an opening part whose groove width gradually decreases toward the inner side in the tire radial direction, and

a sipe part (30) located on its inner side in the tire radial direction.

11. The heavy-duty tire (1) of any one of claims 5 to 10, wherein a cross-sectional shape of the neck part (11) of the circumferential narrow groove (9) is a zigzag shape.

12. The heavy-duty tire (1) of any one of claims 5 to 11, wherein, in a case where W1, in mm, represents a minimum groove width of the neck part (11) of the circumferential narrow groove, and W2, in mm, represents a maximum groove width of the trunk part (12), W2/W1 is 2.0 or more and 8.0 or less.

13. The heavy-duty tire (1) of any one of claims 5 to 12, wherein, in a case where H3, in mm, represents a groove depth of the deepest part of the circumferential narrow groove (9), and H4, in mm, represents a minimum length from a groove bottom of the circumferential narrow groove (9) to the neck part (11) in the tire radial direction, H4/H3 is 0. 25 or more and 0.75 or less.

14. The heavy-duty tire (1) of any one of claims 5 to 13, wherein, one or more of the circumferential narrow grooves (9) comprise an opening part that is arranged on the outer side of the neck part (11) in the tire radial direction and whose groove width widens in a tapered shape.

**Patentansprüche**

1. Schwerlastreifen (1) mit einem Laufflächenteil (3),

   wobei der Laufflächenteil (3) aufweist

      zwei Umfangshauptrillen (8), die sich kontinuierlich in einer Reifenumfangsrichtung erstrecken,
      ein Paar Schulterlandteile (18), die durch die Umfangshauptrillen (8) und bodenberührende Enden abgeteilt sind, und
      einen Kronenlandteil (19), der zwischen dem Paar Schulterlandteile (18) angeordnet ist,

   wobei der Kronenlandteil (19) eine oder mehrere schmale Umfangsrillen (9) umfasst, die sich kontinuierlich in der Reifenumfangsrichtung erstrecken, und
   wobei in einem Fall, in dem H1, in mm, eine Rillentiefe eines tiefsten Teils der Umfangshauptrillen (8) darstellt, E, in mm, eine maximale Dicke der Schulterlandteile (18), gemessen in einer Richtung senkrecht zu einer Reifeninnenhohlraumoberfläche, darstellt und 70°C tan $\delta$ einen tan $\delta$ bei 70°C einer Gummimischung, die den Laufflächenteil (3) bildet, darstellt, H1 15,0 oder weniger beträgt und E x 70°C tan $\delta$ 7,5 oder weniger beträgt, wobei der 70°C tan $\delta$ der Verlusttangens ist, der unter einer Bedingung einer Temperatur bei 70°C, einer Frequenz von 10 Hz, einer Anfangsdehnung von 10%, einer dynamischen Dehnung von $\pm1$% und einem Dehnungsmodus gemessen ist, und
   wobei ein Landverhältnis R in einer Bodenoberfläche des Laufflächenteils (3), nachdem der Laufflächenteil (3) entlang eines Laufflächenradius abgerieben ist, so dass die Rillentiefe des tiefsten Teils der Umfangshauptrillen (8) 75% einer Rillentiefe in einem Minimalzustand ist, 0,90 oder mehr beträgt.

2. Schwerlastreifen (1) nach Anspruch 1, wobei ein komplexer Elastizitätsmodul bei 70°C (70°CE*) der Gummimischung, die den Laufflächenteil (3) bildet, 6,8 MPa oder mehr beträgt, wobei der komplexe Elastizitätsmodul bei 70° der komplexe Elastizitätsmodul ist, der unter einer Bedingung einer Temperatur bei 70°C, einer Frequenz von 10 Hz, einer Anfangsdehnung von 10%, einer dynamischen Dehnung von $\pm1$% und einem Dehnungsmodus gemessen ist.

3. Schwerlastreifen (1) nach einem der Ansprüche 1 oder 2, wobei das Paar Schulterlandteile (18) keine Stollenrillen aufweist.

4. Schwerlastreifen (1) nach einem der Ansprüche 1 bis 3, wobei der Kronenlandteil (18) Feinschnitte umfasst, die sich jeweils in einer Reifenbreitenrichtung erstrecken, und in einem Fall, in dem H2, in mm, eine Tiefe eines tiefsten Teils der Feinschnitte darstellt, H2/H1 0,25 oder mehr beträgt.

5. Schwerlastreifen (1) nach einem der Ansprüche 1 bis 4,
   wobei die schmale Umfangsrille (9) umfasst

      einen Halsteil (11) mit einer schmalen Rillenbreite, und
      einen Rumpfteil (12), der auf einer Innenseite in einer Reifenradialrichtung in Bezug auf den Halsteil (11) angeordnet ist und der einen Teil mit einer Rillenbreite aufweist, die größer als eine maximale Rillenbreite des Halsteils (11) ist.

6. Schwerlastreifen (1) nach einem der Ansprüche 1 bis 5, wobei 70°C tan $\delta$ 0,15 oder weniger beträgt.

7. Schwerlastreifen (1) nach einem der Ansprüche 1 bis 6, wobei für das 70°C tan $\delta$ und das Landverhältnis R 70°C tan $\delta$/R weniger als 0,15 beträgt.

8. Schwerlastreifen (1) nach einem der Ansprüche 1 bis 7, wobei in einem Fall, in dem G, in mm, eine Dicke des Laufflächenteils (3) darstellt und t1, in mm, eine Dicke einer Deckgummischicht (4) darstellt, t1/G 0,70 oder mehr und 0,95 oder weniger beträgt.

9. Schwerlastreifen (1) nach einem der Ansprüche 4 bis 8, wobei sich einer oder mehrere der Feinschnitte in einem Fortschrittsprozess von einem Ende zu dem anderen Ende in der Breitenrichtung biegen.

10. Schwerlastreifen (1) nach einem der Ansprüche 4 bis 9,
wobei einer oder mehrere der Feinschnitte (10) umfassen

einen Öffnungsteil, dessen Rillenbreite allmählich zu der Innenseite in der Reifenradialrichtung abnimmt, und einen Feinschnittteil (30), der auf seiner Innenseite in der Reifenradialrichtung angeordnet ist.

11. Schwerlastreifen (1) nach einem der Ansprüche 5 bis 10, wobei eine Querschnittsform des Halsteils (11) der schmalen Umfangsrille (9) eine Zickzackform ist.

12. Schwerlastreifen (1) nach einem der Ansprüche 5 bis 11, wobei in einem Fall, in dem W1, in mm, eine minimale Rillenbreite des Halsteils (11) der schmalen Umfangsrille darstellt und W2, in mm, eine maximale Rillenbreite des Rumpfteils (12) darstellt, W2/W1 2,0 oder mehr und 8,0 oder weniger beträgt.

13. Schwerlastreifen (1) nach einem der Ansprüche 5 bis 12, wobei in einem Fall, in dem H3, in mm, eine Rillentiefe des tiefsten Teils der schmalen Umfangsrille (9) darstellt und H4, in mm, eine minimale Länge von einem Rillenboden der schmalen Umfangsrille (9) zu dem Halsteil (11) in der Reifenradialrichtung darstellt, H4/H3 0,25 oder mehr und 0,75 oder weniger beträgt.

14. Schwerlastreifen (1) nach einem der Ansprüche 5 bis 13, wobei eine oder mehrere der schmalen Umfangsrillen (9) einen Öffnungsteil umfassen, der auf der Außenseite des Halsteils (11) in der Reifenradialrichtung angeordnet ist und dessen Rillenbreite sich in einer sich verjüngenden Form verbreitert.

## Revendications

1. Pneumatique pour service intensif (1) comprenant une partie formant bande de roulement (3),

dans lequel la partie formant bande de roulement (3) comprend deux rainures principales circonférentielles (8) s'étendant en continu dans une direction circonférentielle du pneumatique, une paire de parties en relief d'épaulement (18) divisées par les rainures principales circonférentielles (8) et des extrémités de contact au sol, et une partie en relief de couronne (19) située entre la paire de parties en relief d'épaulement (18), dans lequel la partie en relief de couronne (19) comprend une ou plusieurs rainures étroites circonférentielles (9) s'étendant en continu dans la direction circonférentielle du pneumatique, et dans lequel, dans un cas où H1, en mm, représente une profondeur de rainure d'une partie la plus profonde des rainures principales circonférentielles (8), E, en mm, représente une épaisseur maximum des parties en relief d'épaulement (18) mesurées dans une direction normale à une surface de cavité intérieure de pneumatique, et 70°C tan $\delta$ représente une valeur tan $\delta$ à 70° C d'une composition de caoutchouc constituant la partie formant bande de roulement (3), H1 est de 15,0 ou moins, et E × 70°C tan $\delta$ est de 7,5 ou moins, dans lequel 70°C tan $\delta$ est la tangente de perte mesurée dans la condition suivante : température de 70 °C, fréquence de 10 Hz, contrainte initiale de 10 %, contrainte dynamique de ±1 %, et mode en extension, et dans lequel un rapport de relief R dans une surface de contact au sol de la partie formant bande de roulement (3), après que la partie formant bande de roulement (3) a été abrasée le long d'un rayon de bande de roulement de telle sorte que la profondeur de rainure de la partie la plus profonde des rainures principales circonférentielles (8) devient 75 % d'une profondeur de rainure dans une condition à l'état neuf, est de 0,90 ou plus.

2. Pneumatique pour service intensif (1) selon la revendication 1, dans lequel un module d'élasticité complexe à 70 °C (70°CE*) de la composition de caoutchouc constituant la partie formant bande de roulement (3) est de 6,8 MPa ou plus, le module d'élasticité complexe à 70 °C étant le module d'élasticité complexe mesuré dans la condition suivante : température de 70° C, fréquence de 10 Hz, contrainte initiale de 10 %, contrainte dynamique de ±1 %, et mode en extension.

3. Pneumatique pour service intensif (1) selon l'une quelconque des revendications 1 ou 2, dans lequel la paire de parties en relief d'épaulement (18) n'a pas de rainure annexe.

4. Pneumatique pour service intensif (1) selon l'une quelconque des revendications 1 à 3, dans lequel la partie en relief de couronne (19) comprend des fentes s'étendant chacune dans une direction de la largeur du pneumatique, et dans un cas où H2, en mm, représente une profondeur d'une partie la plus profonde de la fente, H2/H1 est de 0,25 ou plus.

5. Pneumatique pour service intensif (1) selon l'une quelconque des revendications 1 à 4,

dans lequel la rainure étroite circonférentielle (9) comprend une partie d'étranglement (11) ayant une largeur de rainure étroite, et
une partie tronc (12) qui est agencée sur un côté intérieur dans une direction radiale du pneumatique par rapport à la partie d'étranglement (11) et qui a une partie ayant une largeur de rainure supérieure à une largeur de rainure maximum de la partie d'étranglement (11).

6. Pneumatique pour service intensif (1) selon l'une quelconque des revendications 1 à 5, dans lequel 70°C tan δ est de 0,15 ou moins.

7. Pneumatique pour service intensif (1) selon l'une quelconque des revendications 1 à 6, dans lequel, pour 70°C tan δ et le rapport de relief R, 70°C tan δ/R est inférieur à 0,15.

8. Pneumatique pour service intensif (1) selon l'une quelconque des revendications 1 à 7, dans lequel, dans un cas où G, en mm, représente une épaisseur de la partie formant bande de roulement (3), et t1, en mm, représente une épaisseur d'une couche de caoutchouc de chape (4), ti/G est de 0,70 ou plus et de 0,95 ou moins.

9. Pneumatique pour service intensif (1) selon l'une quelconque des revendications 4 à 8, dans lequel une ou plusieurs des fentes fléchissent dans un processus de progression depuis une extrémité vers l'autre extrémité dans la direction de la largeur.

10. Pneumatique pour service intensif (1) selon l'une quelconque des revendications 4 à 9,

dans lequel une ou plusieurs des fentes (10) comprennent une partie ouverture dont une largeur de rainure diminue graduellement vers le côté intérieur dans la direction radiale du pneumatique, et
une partie fente (30) située sur son côté intérieur dans la direction radiale du pneumatique.

11. Pneumatique pour service intensif (1) selon l'une quelconque des revendications 5 à 10, dans lequel une forme en section transversale de la partie d'étranglement (11) de la rainure étroite circonférentielle (9) est une forme en zigzag.

12. Pneumatique pour service intensif (1) selon l'une quelconque des revendications 5 à 11, dans lequel, dans un cas où W1, en mm, représente une largeur de rainure minimum de la partie d'étranglement (11) de la rainure étroite circonférentielle, et W2, en mm, représente une largeur de rainure maximum de la partie tronc (12), W2/W1 est de 2.0 ou plus et de 8,0 ou moins.

13. Pneumatique pour service intensif (1) selon l'une quelconque des revendications 5 à 12, dans lequel, dans un cas où H3, en mm, représente une profondeur de rainure de la partie la plus profonde de la rainure étroite circonférentielle (9), et H4, en mm, représente une longueur minimum depuis un fond de rainure de la rainure étroite circonférentielle (9) jusqu'à la partie d'étranglement (11) dans la direction radiale du pneumatique, H4/H3 est de 0,25 ou plus et de 0,75 ou moins.

14. Pneumatique pour service intensif (1) selon l'une quelconque des revendications 5 à 13, dans lequel une ou plusieurs des rainures étroites circonférentielles (9) comprennent une partie ouverture qui est agencée sur le côté extérieur de la partie d'étranglement (11) dans la direction radiale du pneumatique et dont une largeur de rainure s'élargit dans une forme effilée.

# FIG. 1

# FIG.2

# FIG.3

# FIG.4

# FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06279624 A
- EP 4015239 A
- EP 4119358 A1